# EUROPÄISCHE PATENTSCHRIFT

(11) **EP 4 017 800 B1**
(45) Veröffentlichungstag und Bekanntmachung des Hinweises auf die Patenterteilung: **11.03.2026**
(21) Anmeldenummer: 20757323.9
(22) Anmeldetag: 14.08.2020
(51) Int. Cl.: B63G 8/39, G10K 11/00, G01S 7/521

(54) **ORTUNGSSIGNALEMPFÄNGER ZUR BESTIMMUNG EINER SCHALLPULSABBILDUNG**
LOCATING SIGNAL RECEIVER FOR DETERMINING A SOUND PULSE MAPPING
RÉCEPTEUR DE SIGNAL DE LOCALISATION POUR DÉTERMINER UNE CARTOGRAPHIE D'IMPULSIONS SONORES

(30) Priorität: 23.08.2019 DE 102019212636
(43) Veröffentlichungstag der Anmeldung: 29.06.2022
(73) Patentinhaber: TKMS ATLAS ELEKTRONIK GmbH, 28309 Bremen (DE); thyssenkrupp AG, 45143 Essen (DE)
(72) Erfinder: SCHWARZ, Jan-philip, 28329 Bremen (DE); GELZE, Johannes, 27726 Worpswede (DE); ROBERTS, Rhys, 27801 Dötlingen (DE)
(74) Vertreter: thyssenkrupp Intellectual Property GmbH
(86) Internationale Anmeldenummer: PCT/EP2020/072904
(87) Internationale Veröffentlichungsnummer: WO 2021/037589

(56) Entgegenhaltungen:
- EP-A1- 0 654 953
- EP-A1- 2 469 507
- CN-A- 109 031 258
- DE-A1- 102015 207 490
- DE-A1- 102016 118 238
- DE-A1- 19 525 877
- FR-A1- 2 769 372

## Beschreibung

Die Erfindung bezieht sich auf ein Array von Unterwasserschallempfangsanordnungen, wobei eine Unterwasserschallempfangsanordnung jeweils einen Unterwasserschallempfänger, auch Hydrophon oder Schallwandler genannt, ein Schallfenster, das für Schallwellen passierbar ist so dass ein Hinter dem Schallfenster angeordneter Unterwasserschallempfänger die Schallwellen detektieren kann, und einen Schallreflektor, der Schallwellen (auf das Hydrophon) reflektieren kann. Das Array kann auch als Sonarsystem bezeichnet werden.

Sonarsysteme, die in bzw. an Wasserfahrzeugen, insbesondere Schiffen oder U-Booten, angeordnet sind, weisen derzeit einen äquidistanten Abstand zwischen den einzelnen Hydrophonen auf, um die Auswertung der einzelnen Hydrophonsignale zu vereinfachen. Insbesondere ist die Richtungsbildung, engl. Beamforming, vereinfacht, wenn die Hydrophone auf einer Geraden angeordnet sind. Dies hat allerdings den Nachteil, dass das Array nur an Flächen des Wasserfahrzeugs angebracht werden kann, die keine oder nur eine geringe Krümmung aufweisen. An gekrümmten Stellen sind Hydrophone mittels eines Abstandshalters am Wasserfahrzeug befestigt, damit die Hydrophone weiterhin auf einer Geraden angeordnet ist. An Stellen mit einer starken Krümmung stehen die Hydrophone demnach entsprechend weit vom Wasserfahrzeug ab. Ferner ist eine Anordnung beispielsweise um den Bug des Wasserfahrzeugs herum nicht möglich. Auch wird das Sonarsystem auf der Außenhülle des Wasserfahrzeugs angebracht und kann zumindest nicht komplett im Inneren des Wasserfahrzeugs angeordnet sein, so dass die Schallfenster mit einer Außenhülle des Wasserfahrzeugs abschließen. Dies hat jedoch insbesondere bei U-Booten den Nachteil, dass an Stellen, an denen das Schallfenster sich von der Außenhülle abhebt, Verwirbelungen auftreten. Verwirbelungen erzeugen jedoch Schallwellen, die gerade bei U-Booten, die möglichst leise fahren sollen um nicht erkannt zu werden, nicht erwünscht sind.

EP 2 469 507 A1 offenbart eine akustische Unterwasserantenne zum Anbau an einen Bootskörper.

DE 10 2016 118 238 A1 offenbart eine Unterwasserantenne für ein Unterwasserfahrzeug, wobei die Unterwasserantenne einen Reflektor, mehrere Hydrophone und mindestens eine Halterung zur Befestigung der Unterwasserantenne an einem Unterwasserfahrzeug umfasst.

FR 2 769 372 A1 offenbart ein Verfahren zur Korrektor der Auswirkungen parasitärer Antennenbewegungen in einem synthetischen Antennensonar.

CN 109 031 258 offenbart ein asymmetrisches akustisches konformes Array.

EP 0 654 953 A1 offenbart eine elektroakustische Wandleranordnung für Unterwasserantennen.

DE 10 2015 207 490 A1 offenbart eine Ruderanordnung bei einem Unterwasserfahrzeug.

DE 19 525 877 A1 offenbart ein Verfahren zur Unterdrückung von Körperschallstörungen bei einer akustischen Ortungsanlage.

Die Aufgabe der vorliegenden Erfindung besteht deshalb darin, ein verbessertes Konzept für ein Arrayzum Empfang von Unterwasserschall, insbesondere Sonarsysteme, zu schaffen.

Die Aufgabe wird durch den Gegenstand der unabhängigen Patentansprüche gelöst. Weitere vorteilhafte Ausführungsformen sind der Gegenstand der abhängigen Patentansprüche.

Ausführungsbeispiele zeigen ein Array von Unterwasserschallempfangsanordnungen zum Empfang von Unterwasserschall. Das Array weist eine Vielzahl von Unterwasserschallempfangsanordnungen auf. Eine, insbesondere jede, Unterwasserschallempfangsanordnung weist einen Unterwasserschallempfänger, einen Schallreflektor und ein Schallfenster auf oder es ist ein gemeinsames Schallfenster vorgesehen. Eine erste Unterwasserschallempfangsanordnung ist benachbart zu einer zweiten Unterwasserschallempfangsanordnung angeordnet und eine dritte Unterwasserschallempfangsanordnung ist benachbart zu der zweiten Unterwasserschallempfangsanordnung angeordnet. Die erste und die zweite Unterwasserschallempfangsanordnung weisen einen ersten Abstand zueinander auf und die zweite und die dritte Unterwasserschallempfangsanordnung weisen einen zweiten Abstand zueinander auf, wobei sich der erste und der zweite Abstand voneinander unterscheiden. Die Unterwasserschallempfangsanordnungen bilden jeweils ein individuelles Modul. In anderen Worten sind die Unterwasserschallempfangsanordnungen, insbesondere die entsprechenden Unterwasserschallempfänger, nicht äquidistant angeordnet, sie weisen also die Abwesenheit einer äquidistanten Entfernung zueinander auf. Die Unterwasserschallempfangsanordnungen können mittels eines Bussystems verbunden sein, um Audiosignale einer Auswerteeinheit zur Verfügung zu stellen.

Die Idee liegt darin begründet, kleine individuelle Module, die jeweils einen Unterwasserschallempfänger, ein Schallfenster und einen Schallreflektor aufweisen, zu bilden und diese so anzuordnen, dass diese an eine Form des Wasserfahrzeugs angepasst sind. Bisher umfassen die Module jeweils eine Mehrzahl von Hydrophonen, wodurch eine Individualisierung der Form des Arrays nicht möglich ist. Mittels der kleinen Module können die Unterwasserschallempfänger beispielsweise innerhalb der Außenhülle des Wasserfahrzeugs, beispielsweise im Rumpf des Schiffes oder innerhalb der Hülle des U-Boots angeordnet sein. Die Schallfenster verschließen die Außenhülle dann wasserdicht und können so insbesondere dem Wasserdruck widerstehen. Die Unterwasserschallempfänger können dann in einer Kammer hinter dem Schallfenster angeordnet sein. Die Kammer kann mit Wasser gefüllt sein. Durch die Außenhülle oder die Schallfenster kann jedoch ein Wasseraustausch des das Wasserfahrzeug umgebenden Wassers mit dem Wasser in der Kammer erfolgen. Somit ist die Schallausbreitung in der Kammer möglichst ähnlich zu der Schallausbreitung auf der anderen Seite des Schallfensters.

In Ausführungsbeispielen sind die Unterwasserschallempfangsanordnungen entlang einer gekrümmten Linie aufgereiht. Dies ermöglicht die Anpassung der Form der Sonarsysteme an eine beliebige Form. Insbesondere kann die Linie eine Krümmung in eine erste Richtung und in eine zweite Richtung aufweist. Durch die Krümmung in zwei Richtungen kann sich das Array von Unterwasserschallempfangsanordnungen in einer Ebene in unterschiedliche Richtungen erstrecken. Durch die Krümmung in die erste Richtung und die zweite Richtung kann die Linie, also das Array der Unterwasserschallempfangsanordnungen, einen Verlauf in drei Raumrichtungen erfahren.

Ist sind die Unterwasserschallempfangsanordnungen entlang einer gekrümmten Linie aufgereiht, liegt ein eindimensionales bzw. einzeiliges Array der Unterwasserschallempfangsanordnungen vor. Es kann aber auch ein mehrdimensionales bzw. mehrzeiliges Array der Unterwasserschallempfangsanordnungen vorliegen. Dann weist das Array eine Mehrzahl von gekrümmten Linien auf, entlang derer die Unterwasserschallempfangsanordnungen aufgereiht sind. Insbesondere bilden die Unterwasserschallempfangsanordnungen dann eine Fläche bzw. ein Flächenarray aus. Benachbarte gekrümmte Linien der Mehrzahl von gekrümmten Linien können die Abwesenheit eines äquidistanten Abstands aufweisen. Dies ist vorteilhaft, damit das (Flächen-) Array der Unterwasserschallempfangsanordnungen an die Außenhülle des Wasserfahrzeugs angepasst werden kann.

Neben der Anpassung an die Form des Wasserfahrzeugs kann durch die Verwendung der Unterwasserschallempfangsanordnungen (als kleine Module) auch ein Frequenzgang des Arrays zum Empfang von Unterwasserschall angepasst werden. Der Frequenzgang lässt sich beispielsweise dadurch einstellen, dass der Abstand zwischen Schallreflektor und Unterwasserschallempfänger bei verschiedenen Unterwasserschallempfangsanordnungen variiert wird. In anderen Worten unterscheidet sich ein Abstand des Unterwasserschallempfängers von dem Schallreflektor der Vielzahl von Unterwasserschallempfangsanordnungen voneinander. Durch den Abstand des Schallreflektors zu dem Unterwasserschallempfänger kann die Wellenlänge der Schallwellen eingestellt werden, die sich im Unterwasserschallempfänger nach vorheriger Reflektion am Schallreflektor und ohne Reflektion am Schallreflektor konstruktiv Überlagern. Die äquivalente Frequenz der Schallwellen, die sich konstruktiv Überlagern, wird auch als Designfrequenz bezeichnet.

Ferner kann sich auch eine Größe der Unterwasserschallempfänger der Vielzahl von Unterwasserschallempfangsanordnungen voneinander unterscheiden. Somit wird beispielsweise die Resonanzfrequenz des Unterwasserschallempfängers eingestellt. Dieser wird zwar typischerweise außerhalb der Resonanzfrequenz betrieben, es kann jedoch sinnvoll sein, insbesondere bei hohen Designfrequenzen, die Größe der Unterwasserschallempfangsanordnung derart zu verändern, dass auch die Resonanzfrequenz der Unterwasserschallanordnung erhöht wird, um mit der Resonanzfrequenz nicht in der Nähe der Designfrequenz zu liegen. Bei einer höheren Resonanzfrequenz verläuft die Empfindlichkeitskurve des Unterwasserschallempfängers dann auch bei größeren Schallfrequenzen noch linear.

In Ausführungsbeispielen die sich auf die Unterwasserkommunikation beziehen kann es jedoch auch sinnvoll sein, den Unterwasserschallempfänger in der Nähe seiner Resonanzfrequenz zu betreiben. Als Unterwasserkommunikation wird der (gezielte) Datenaustausch unter Wasser mittels Sonar bezeichnet. In der Nähe der Resonanzfrequenz hat der Unterwasserschallempfänger dann eine größere Empfangsempfindlichkeit. Ferner ist die nicht-linearität der Empfindlichkeitskurve im Falle der Unterwasserkommunikation weniger von Relevanz, da für den Datenaustausch typischerweise ein enges, vorbestimmtes Frequenzband verwendet wird. Eine Signalverarbeitung ist somit immer noch gut möglich. Die Signalverarbeitung wäre jedoch bei einem breitbandigen Signal wie es typischerweise bei der Ortung mittels Sonar vorliegt, bei einer nichtlinearen Empfindlichkeitskurve wie sie in der Nähe der Resonanzfrequenz vorliegt, deutlich erschwert.

Offenbart ist ferner ein Wasserfahrzeug mit einem Körper, der durch eine Außenhülle begrenzt ist, wobei die Außenhülle ausgebildet ist, in Kontakt mit Wasser, insbesondere Salz- bzw. Meerwasser zu stehen. Die Vielzahl von Unterwasserschallempfangsanordnungen sind derart in dem Wasserfahrzeug verbaut, dass die Schallfenster das Einfallen einer Schallwelle in den Körper ermöglichen, wobei die zugehörigen Unterwasserschallempfänger in dem Körper zwischen den Schallfenstern und den zugehörigen Schallreflektoren angeordnet sind. Die Schallfenster können eine Öffnung der Außenhülle verschließen. Das Verschließen kann derart erfolgen, dass die Schallfenster mit der Außenhülle abschließen, d.h. dass die Schallfenster derart geformt sind, dass sie die fehlenden Teile der Außenhülle nachbilden. Vorteilhafterweise sind die Schallfenster derart geformt, dass diese einen weichen Übergang und keine Kante mit der Außenhülle bilden.

In Ausführungsbeispielen kann sich die Unterwasserschallempfangsanordnung um einen Bug des Wasserfahrzeugs erstrecken. Dies ist vorteilhaft um die Schalleinfallsrichtungen, aus der Schallwellen detektiert werden, vergrößert werden. Ferner wird somit der Endfire-Beam, einer einstellbaren Empfangscharakteristik der Unterwasserschallanordnung, nicht nur für hochfrequente Signale, sondern auch für niederfrequentere Signale ermöglicht. Dies ist der Fall, da sich die Apertur der Unterwasserschallempfangsanordnung vergrößert.

Ferner ist ein Verfahren zur Anpassung des Arrays von Unterwasserschallempfangsanordnungen zum Empfang von Unterwasserschall an das Wasserfahrzeug gezeigt. Das Verfahren umfasst das Bestimmen einer akustischen Impedanz des Wasserfahrzeugs. Dies kann beispielsweise mittels der Finite Elemente Methode für ein Punkteraster in dem Wasserfahrzeug zur Verfügung stehenden Bauraum für die Unterwasserschallempfangsanordnung durchgeführt werden. Es folgt das Optimieren einer Anordnung der Unterwasserschallempfangsanordnungen des Arrays zum Empfang von Unterwasserschall innerhalb des zur Verfügung stehenden Bauraums in dem Wasserfahrzeug. Das Optimieren umfasst eine Analyse des Frequenzgangs des Arrays zum Empfang von Unterwasserschall, wobei der Frequenzgang durch das Optimieren linearisiert wird. In anderen Worten kann trotz der nicht linearen Form der Unterwasserschallempfangsanordnung unter Berücksichtigung des Verhaltens des Wasserfahrzeugs auf die einfallenden Schallwellen, also der akustischen Impedanz des Wasserfahrzeugs, eine Annäherung des Frequenzgangs im Anwendungsbereich an einen linearen Frequenzgang erfolgen.

Um den Frequenzgang zu linearisieren kann die Anordnung der Unterwasserschallemfangsanordnung variiert werden. Das heißt, der Abstand zwischen den Unterwasserschallempfangsanordnungen bzw. den Unterwasserschallempfängern und/oder der Abstand zwischen Schallreflektoren und Unterwasserschallempfängern der Unterwasserschallanordnungen und/oder die Größe der Unterwasserschallempfänger kann variiert werden. Ferner kann auch die Tiefe der Unterwasserschallempfangsanordnung, insbesondere eines Unterwasserschallempfängers, in dem zur Verfügung stehenden Bauraum variiert werden. Eine Optimierung eines oder mehrerer der genannten Parameter kann dann zu einer verbesserten Linearisierung des Frequenzgangs führen.

Für einen linearen Frequenzgang sind die Unterwasserschallempfänger der Unterwasserschallempfangsanordnung in einem Abstand zueinander anzuordnen, dass sich im betrachteten Frequenzbereich, genauer für eine ausgewählte Frequenz, keine Maxima und Minima in der Empfangsempfindlichkeit ergeben. Dies wird erreicht, wenn die Unterwasserschallempfänger in einem Abstand zueinander angeordnet werden, der der halben Wellenlänge der ausgewählten Frequenz entsprechen. In anderen Worten wird die Unterwasserschallempfangsanordnung durch die Wahl der Abstände zwischen den einzelnen Unterwasserschallempfängern für einen ausgewählten Frequenzbereich optimiert. Durch die Optimierung ist die Empfangsempfindlichkeit der Unterwasserschallempfangsanordnung im ausgewählten Frequenzbereich (nahezu) gleich.

In Ausführungsbeispielen kann die Unterwasserschallempfangsanordnung nicht nur auf einen Frequenzbereich, sondern auf eine Mehrzahl von Frequenzbereichen optimiert werden. Dies ist möglich, wenn Gruppen der Unterwasserschallempfänger innerhalb der Unterwasserschallempfangsanordnung gebildet werden. So kann eine erste Gruppe von Unterwasserschallempfängern auf einen ersten Frequenzbereich optimiert sein und eine zweite Gruppe von Unterwasserschallempfängern auf einen zweiten Frequenzbereich optimiert sein. In der ersten Gruppe können die Unterwasserschallempfänger einen ersten Abstand zueinander aufweisen, der der halben Wellenlänge einer (Mitten-) Frequenz des ersten Frequenzbereichs entspricht und in der zweiten Gruppe können die Unterwasserschallempfänger einen zweiten Abstand zueinander aufweisen, der der halben Wellenlänge einer (Mitten-) Frequenz des zweiten Frequenzbereichs entspricht.

Dies ist vorteilhaft, um gezielt mehrere Frequenzbänder überwachen zu können oder einzelne (dominante) Frequenzen ausblenden zu können. Das Ausblenden von Frequenzen kann dann sinnvoll sein, wenn eine laute Schallquelle unter Wasser eine leise Schallquelle mit einer anderen Frequenz überlagert. Die leise Schallquelle kann dann mit einer Gruppe von Unterwasserschallempfängern detektiert werden, wenn diese auf eine ähnliche Frequenz optimiert ist und die lauten Frequenzen der anderen Schallquelle einen entsprechenden Abstand zu der Frequenz (bzw. den Frequenzen) der leisen Schallquelle aufweisen.

Bevorzugte Ausführungsbeispiele der vorliegenden Erfindung werden nachfolgend Bezug nehmend auf die beiliegenden Zeichnungen erläutert. Es zeigen:
Fig. 1: eine schematische Darstellung des Arrays zum Empfang von Unterwasserschallsignalen;
Fig. 2: eine schematische Darstellung eines Wasserfahrzeugs mit dem Array aus Fig. 1 in einer Seitenansicht;
Fig. 3: eine schematische perspektivische Darstellung des Wasserfahrzeugs aus Fig. 2; und
Fig. 4: eine schematische Darstellung des Wasserfahrzeugs mit einem Flächenarray von Unterwasserschallempfangsanordnungen.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

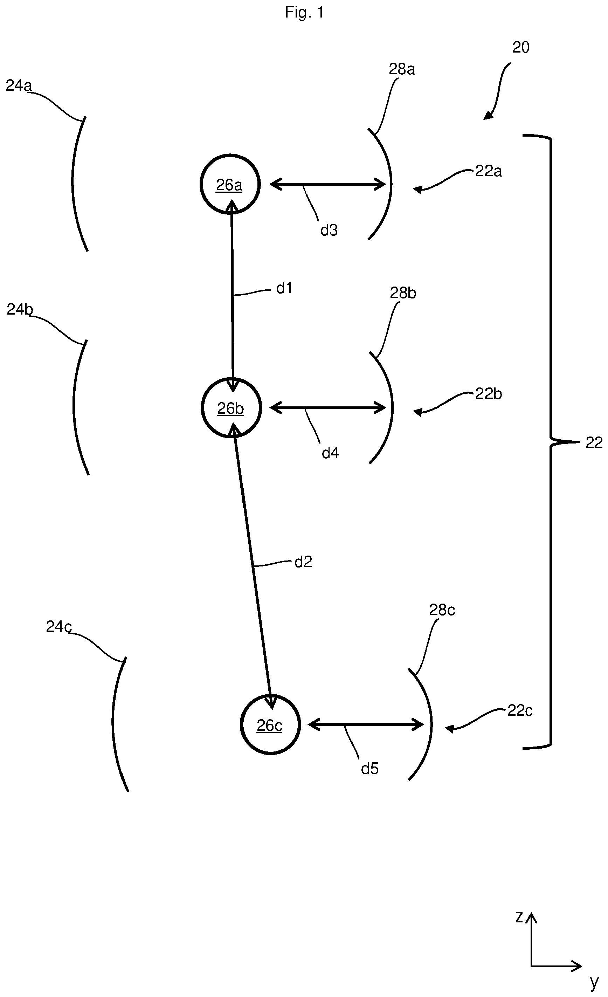

Fig. 1 zeigt eine schematische Darstellung eines Arrays 20 zum Empfang von Unterwasserschall. Das Array umfasst eine Vielzahl von Unterwasserschallanordnungen 22a, 22b, 22c. Die Unterwasserschallanordnungen 22 weisen (jeweils) ein Schallfenster 24a, 24b, 24c, einen Unterwasserschallempfänger 26a, 26b, 26c und einen Schallreflektor 28a, 28b, 28c auf. Es kann jedoch auch ein gemeinsames Schallfenster vorgesehen sein. Das zu einer der Unterwasserschallempfangsanordnungen gehörende Schallfenster ist dann ein Abschnitt des gemeinsamen Schallfensters, hinter dem der entsprechende Unterwasserschallempfänger angeordnet ist.

Das Array ist ausgebildet, Schallwellen zu empfangen, die (zumindest teilweise) aus y-Richtung auf die Unterwasserschallanordnungen auftreffen. Diese Richtung wird als Schalleinfallsrichtung bezeichnet. Aus Schalleinfallsrichtung betrachtet ist der Unterwasserschallempfänger einer Unterwasserschallanordnung 22 zwischen dem zugehörigen Schallfenster und dem zugehörigen Schallreflektor angeordnet. Der Schallreflektor kann ausgebildet sin, auftreffende Schallwellen zu bündeln und diese auf den Unterwasserschallempfänger zu fokussieren. Hierzu kann der Schallreflektor (in Richtung des Unterwasserschallempfängers) konkav ausgestaltet sein. Das Schallfenster kann auf der dem Unterwasserschallempfänger abgewandten Seite konvex ausgestaltet sein. Dies erhöht die Widerstandsfähigkeit gegen den Wasserdruck. Ferner kann dies der Form der Außenhülle eines Wasserfahrzeugs entsprechen, so dass sich das Schallfenster in die Form der Außenhülle einpasst. Das Schallfenster kann aber auch eben bzw. plan, also nicht konvex, ausgestaltet sein.

Die zweite Unterwasserschallanordnung 22b ist benachbart zu der ersten Unterwasserschallanordnung 22a und zu der dritten Unterwasserschallanordnung 22c angeordnet. Ein Abstand d1 zwischen der ersten und der zweiten Unterwasserschallanordnung 22a, 22b unterscheidet sich von einem Abstand d2 zwischen der zweiten und der dritten Unterwasserschallanordnung 22b, 22c. In Fig. 1 ist der Abstand d1 kleiner als der Abstand d2. Als Abstand kann die Entfernung zwischen den Mittel- bzw. Schwerpunkten der Unterwasserschallempfänger angesehen werden.

Ferner kann auch ein Abstand d3, d4, d5 zwischen den Unterwasserschallempfängern 26a, 26b, 26c und den entsprechenden Schallreflektoren 28a, 28b, 28c des Arrays variieren. Über diesen Abstand kann die Designfrequenz der einzelnen Unterwasserschallempfangsanordnungen eingestellt werden.

Ferner ist ersichtlich, dass eine Unterwasserschallanordnung, hier die dritte Unterwasserschallanordnung 22c, in Schalleinfallsrichtung nach hinten versetzt angeordnet ist. Die Unterwasserschallempfangsanordnungen 22a, 22b, 22c sind demnach auf einer gekrümmten Linie angeordnet. Die gekrümmte Linie weist eine Krümmung in die gleiche Richtung auf, in die auch die Schalleinfallsrichtung verläuft.

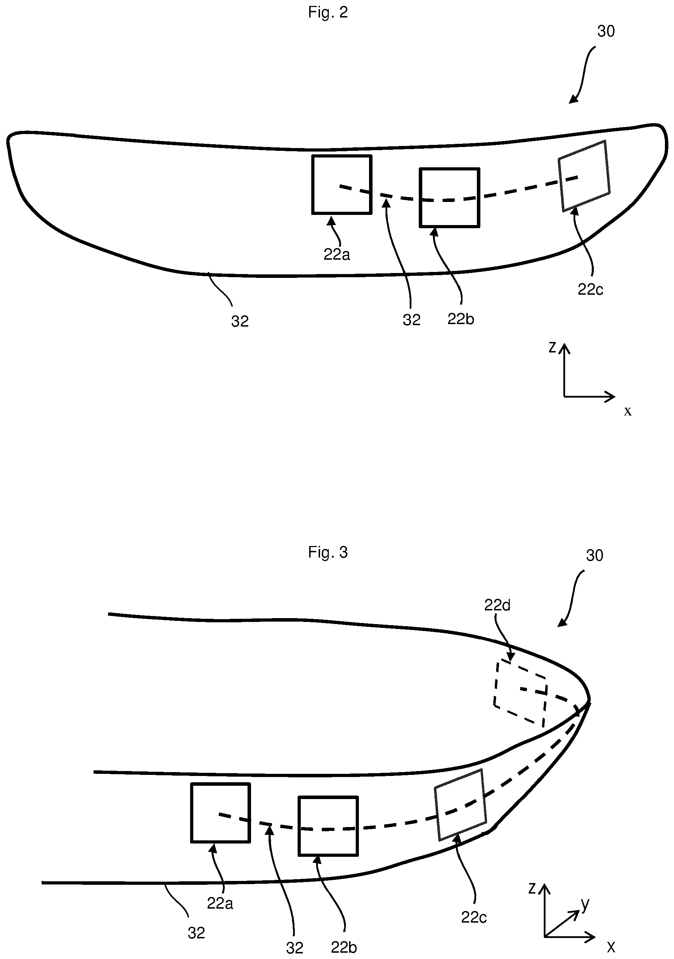

Fig. 2 zeigt eine schematische Darstellung eines Wasserfahrzeugs 30 in einer Seitenansicht. Das Wasserfahrzeug 30 weist eine Außenhülle 32 auf, die einen Körper des Wasserfahrzeugs 30 zumindest dort umschließt, wo das Wasserfahrzeug im Betrieb in dauerhaften Kontakt mit Wasser steht. Eine gedankliche gekrümmte Linie 34 verbindet die Unterwasserschallempfangsanordnungen, insbesondere die Unterwasserschallempfänger miteinander.

Fig. 3 zeigt eine schematische Darstellung eines Ausschnitts des Bugs des Wasserfahrzeugs 30 aus Fig. 2 in einer perspektivischen Darstellung. Hier wird deutlich, dass die Linie 32 sowohl in x-, als auch in y- und in z-Richtung gekrümmt sein kann. Bereits bei zwei Krümmungswechseln kann die Linie einen Verlauf in drei Raumrichtungen erfahren. Somit kann sich das Array der Form der Außenhülle des Wasserfahrzeugs vollständig anpassen und sogar, wie in Fig. 3 mit den Unterwasserschallempfangsanordnungen 22c und 22d gezeigt, um den Bug des Wasserfahrzeugs herum gelegt sein. Nur der besseren Darstellbarkeit ist es geschuldet, dass zwischen den Unterwasserschallempfangsanordnungen 22c und 22d keine weiteren Unterwasserschallempfangsanordnungen am Bug des Wasserfahrzeugs 30 angeordnet sind.

Die Ausgestaltung des Arrays, insbesondere die Abstände d1 bis d5, die Größe der Unterwasserschallempfänger 26a, 26b, 26c, kann für jedes Wasserfahrzeug spezifisch ermittelt werden. Beispielsweise kann dies anhand eines (Computer-) Modells des Wasserfahrzeugs erfolgen, bei dem, z.B. mittels der Finite Elemente Methode, die Schallausbreitung simuliert wird. Mittels Variation der vorgenannten Parameter kann eine Optimierung des Arrays an das Wasserfahrzeug erfolgen. Insbesondere kann so ein Frequenzgang des Arrays in einem Anwendungsbereich linearisiert werden. Der Anwendungsbereich kann zwischen 1und 100 kHz, insbesondere zwischen 2 und 80 kHz liegen. Neben der Möglichkeit, eine räumliche Anordnung der Unterwasserschallempfangsanordnungen oder der Unterwasserschallempfänger zu verändern, um den Frequenzgang zu linearisieren, kann auch eine Elektronik, die die Ausgangssignale der Unterwasserschallempfänger verarbeitet, beispielsweise mittels Verzögerungsgliedern, den Frequenzgang linearisieren.

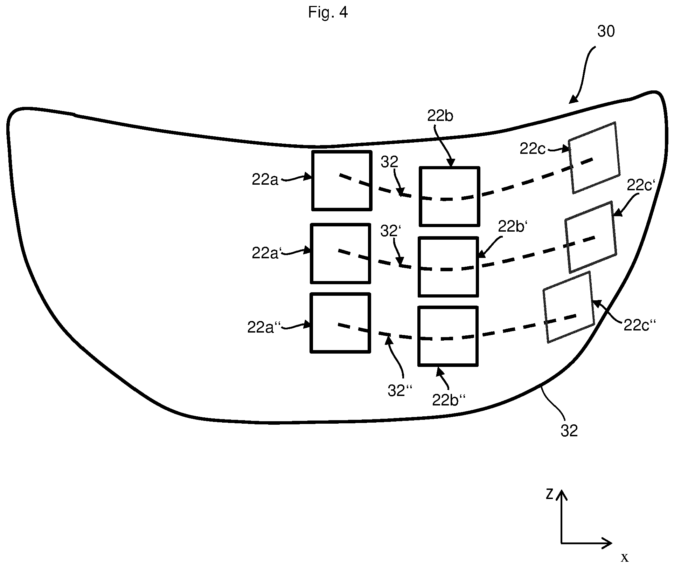

In Fig. 2 und Fig. 3 ist jeweils nur eine Linie gezeigt, entlang derer die Unterwasserschallempfangsanordnungen aufgereiht sein können. Somit bildet sich ein Linienarray aus. Werden weitere Arrays beispielsweise unterhalb des in Fig. 2 und Fig. 3 gezeigten Arrays angeordnet, ergeben sich untereinander angeordnete Linien, entlang derer Unterwasserschallempfangsanordnungen aufgereiht sein können (vgl. Fig. 4). Dann bildet sich ein Flächenarray aus. Insbesondere um das Flächenarray an die Außenhülle des Wasserfahrzeugs anpassen zu können, verlaufen die Linien jedoch typischerweise nicht parallel. Das heißt, dass Abstände zwischen auf verschiedenen Linien angeordneten benachbarten Unterwasserschallempfangsanordnungen variieren können.

So zeigt Fig. 4 eine schematische Darstellung des Wasserfahrzeugs 30. Gezeigt sind drei Linien 32, 32` und 32", auf denen die Unterwasserschallanordnungen 22a, 22b, 22c, 22a', 22b', 22c', 22a", 22b", 22c" angeordnet sind. Die Unterwasserschallanordnungen bilden ein 3x3 Array.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein. Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahingehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste:

- 20: Array
- 22: Unterwasserschallempfangsanordnung
- 24: Schallfenster
- 26: Unterwasserschallempfänger
- 28: Schallreflektor
- 30: Wasserfahrzeug
- 32: Außenhülle
- 34: Linie

## Patentansprüche

1. Array von Unterwasserschallempfangsanordnungen (20) zum Empfang von Unterwasserschall mit folgenden Merkmalen:
einer Vielzahl von Unterwasserschallempfangsanordnungen (22), wobei eine Unterwasserschallempfangsanordnung (22) einen Unterwasserschallempfänger (26), einen Schallreflektor (28) und ein Schallfenster (24) aufweist oder wobei ein gemeinsames Schallfenster vorgesehen ist;
wobei eine erste Unterwasserschallempfangsanordnung (22) benachbart zu einer zweiten Unterwasserschallempfangsanordnung (22) und wobei eine dritte Unterwasserschallempfangsanordnung (22) benachbart zu der zweiten Unterwasserschallempfangsanordnung (22) angeordnet ist;
wobei die erste und die zweite Unterwasserschallempfangsanordnung (22) einen ersten Abstand zueinander aufweisen und wobei die zweite und die dritte Unterwasserschallempfangsanordnung (22) einen zweiten Abstand zueinander aufweisen, wobei sich der erste und der zweite Abstand voneinander unterscheiden, **dadurch gekennzeichnet, dass** die Unterwasserschallempfangsanordnungen jeweils ein individuelles Modul bilden.

2. Array (20) gemäß Anspruch 1,
wobei die Unterwasserschallempfangsanordnungen (22) entlang einer gekrümmten Linie (34) aufgereiht sind.

3. Array (20) gemäß Anspruch 2,
wobei die Linie (34) eine Krümmung in eine erste Richtung und in eine zweite Richtung aufweist.

4. Array (20) gemäß Anspruch 3,
wobei die Linie (34) durch die Krümmung in die erste Richtung und die zweite Richtung einen Verlauf in drei Raumrichtungen erfährt.

5. Array (20) gemäß einem der Ansprüche 2 bis 4, mit einer Mehrzahl von gekümmten Linien (34), entlang derer die Unterwasserschallempfangsanordnungen (22) aufgereiht sind.

6. Array (20) gemäß Anspruch 5, wobei benachbarte gekrümmte Linien (34) der Mehrzahl von gekrümmten Linien (34) die Abwesenheit eines äquidistanten Abstands aufweisen.

7. Array (20) gemäß einem der vorherigen Ansprüche,
wobei sich eine Größe der Unterwasserschallempfänger (26) der Vielzahl von Unterwasserschallempfangsanordnungen (22) voneinander unterscheidet.

8. Array (20) gemäß einem der vorherigen Ansprüche,
wobei sich ein Abstand des Unterwasserschallempfängers (26) von dem Schallreflektor (28) der Vielzahl von Unterwasserschallempfangsanordnungen (22) voneinander unterscheidet.

9. Wasserfahrzeug (30) mit folgenden Merkmalen:
einem Körper, der durch eine Außenhülle (32) begrenzt ist, wobei die Außenhülle (32) ausgebildet ist, in Kontakt mit Wasser zu stehen;
dem Array (20) gemäß einem der Ansprüche 1 bis 8, wobei die Vielzahl von Unterwasserschallempfangsanordnungen (22) derart in dem Wasserfahrzeug (30) verbaut sind, dass die Schallfenster (24) das Einfallen einer Schallwelle in den Körper ermöglichen, wobei die zugehörigen Unterwasserschallempfänger (26) in dem Körper zwischen den Schallfenstern (24) und den zugehörigen Schallreflektoren angeordnet sind.

10. Wasserfahrzeug (30) gemäß Anspruch 9,
wobei die Schallfenster (24) eine Öffnung der Außenhülle (32) verschließen.

11. Wasserfahrzeug (30) gemäß einem der Ansprüche 9 oder 10,
wobei die Schallfenster (24) mit der Außenhülle (32) abschließen.

12. Wasserfahrzeug (30) gemäß einem der Ansprüche 9 bis 11,
wobei sich die Unterwasserschallempfangsanordnung (22) um einen Bug des Wasserfahrzeugs erstreckt.

13. Verfahren zur Anpassung eines Arrays von Unterwasserschallempfangsanordnungen (20) gemäß einem der Ansprüche 1 bis 8 zum Empfang von Unterwasserschall an ein Wasserfahrzeug (30) mit folgenden Schritten:
Bestimmen einer akustischen Impedanz des Wasserfahrzeugs,
Optimieren einer Anordnung der Unterwasserschallempfangsanordnungen (22) des Arrays (20) zum Empfang von Unterwasserschall innerhalb eines zur Verfügung stehenden Bauraums in dem Wasserfahrzeug.

14. Verfahren gemäß Anspruch 13, wobei das Optimieren eine Analyse des Frequenzgangs des Arrays (20) zum Empfang von Unterwasserschall umfasst, wobei der Frequenzgang durch das Optimieren linearisiert wird.

15. Verfahren gemäß einem der Ansprüche 13 oder 14, wobei die Anordnung der Unterwasserschallempfangsanordnungen (22) einen Abstand zwischen den Unterwasserschallempfangsanordnungen (22) und/oder einen Abstand zwischen Schallreflektoren und Unterwasserschallempfängern (26) der Unterwasserschallanordnungen und/oder eine Größe der Unterwasserschallempfänger (26) umfasst.

## Claims

1. Array of underwater sound receiving devices (20) for receiving underwater sound, comprising:
a plurality of underwater sound receiving devices (22), wherein an underwater sound receiving device (22) comprises an underwater sound receiver (26), a sound reflector (28) and a sound window (24), or wherein a common sound window is provided;
wherein a first underwater sound receiving arrangement (22) is arranged adjacent to a second underwater sound receiving arrangement (22) and wherein a third underwater sound receiving arrangement (22) is arranged adjacent to the second underwater sound receiving arrangement (22);
wherein the first and second underwater sound receiving arrays (22) have a first distance between them and wherein the second and third underwater sound receiving arrays (22) have a second distance between them, wherein the first and second distances differ from each other, **characterized in that** the underwater sound receiving arrays each form an individual module.

2. Array (20) according to claim 1,
wherein the underwater sound receiving arrays (22) are arranged along a curved line (34).

3. Array (20) according to claim 2,
wherein the line (34) has a curvature in a first direction and in a second direction.

4. Array (20) according to claim 3,
wherein the line (34) experiences a course in three spatial directions due to the curvature in the first direction and the second direction.

5. Array (20) according to any one of claims 2 to 4, with a plurality of curved lines (34) along which the underwater sound receiving devices (22) are arranged.

6. Array (20) according to claim 5, wherein adjacent curved lines (34) of the plurality of curved lines (34) exhibit the absence of an equidistant spacing.

7. Array (20) according to any of the previous claims,
wherein a size of the underwater sound receivers (26) of the plurality of underwater sound receiving arrays (22) differs from one another.

8. Array (20) according to any of the preceding claims,
wherein a distance of the underwater sound receiver (26) from the sound reflector (28) of the plurality of underwater sound receiving arrangements (22) differs from one another.

9. Watercraft (30) comprising:
a body bounded by an outer hull (32), wherein the outer hull (32) is configured to be in contact with water;
the array (20) according to one of claims 1 to 8, wherein the plurality of underwater sound receiving devices (22) are installed in the watercraft (30) in such a way that the sound windows (24) allow a sound wave to enter the body, wherein the associated underwater sound receivers (26) being arranged in the body between the sound windows (24) and the associated sound reflectors.

10. Watercraft (30) according to claim 9,
wherein the sound windows (24) close an opening in the outer hull (32).

11. Watercraft (30) according to one of claims 9 or 10,
wherein the sound windows (24) terminate at the outer hull (32).

12. Watercraft (30) according to any one of claims 9 to 11,
wherein the underwater sound receiving array (22) extends around a bow of the watercraft.

13. A method for adapting an array of underwater sound receiving arrangements (20) according to one of claims 1 to 8 for receiving underwater sound to a watercraft (30), comprising the following steps:
determining an acoustic impedance of the watercraft;
optimizing an arrangement of the underwater sound receiving arrays (22) of the array (20) for receiving underwater sound within an available installation space in the watercraft.

14. Method according to claim 13, wherein the optimizing comprises analyzing the frequency response of the array (20) for receiving underwater sound, wherein the frequency response is linearized by the optimizing.

15. Method according to one of claims 13 or 14, wherein the arrangement of the underwater sound receiving devices (22) comprises a distance between the underwater sound receiving devices (22) and/or a distance between sound reflectors and underwater sound receivers (26) of the underwater sound devices and/or a size of the underwater sound receivers (26).

## Revendications

1. Réseau de dispositifs de réception de sons sous-marins (20) pour la réception de sons sous-marins, présentant les caractéristiques suivantes :
une pluralité de dispositifs de réception de sons sous-marins (22), un dispositif de réception de sons sous-marins (22) comportant un récepteur de sons sous-marins (26), un réflecteur acoustique (28) et une fenêtre acoustique (24) ou une fenêtre acoustique commune étant prévue ;
un premier dispositif de réception de sons sous-marins (22) étant disposé à proximité d'un deuxième dispositif de réception de sons sous-marins (22) et un troisième dispositif de réception de sons sous-marins (22) étant disposé à proximité du deuxième dispositif de réception de sons sous-marins (22) ;
les premier et deuxième dispositifs de réception de sons sous-marins (22) présentant une première distance l'un par rapport à l'autre et les deuxième et troisième dispositifs de réception de sons sous-marins (22) présentant une deuxième distance l'un par rapport à l'autre, les première et deuxième distances étant différentes l'une de l'autre, **caractérisé en ce que** les dispositifs de réception de sons sous-marins forment chacun un module individuel.

2. Réseau (20) selon la revendication 1,
les dispositifs de réception de sons sous-marins (22) étant alignés le long d'une ligne courbe (34).

3. Réseau (20) selon la revendication 2,
la ligne (34) présentant une courbure dans une première direction et dans une deuxième direction.

4. Réseau (20) selon la revendication 3,
dans lequel la ligne (34) subit, en raison de la courbure dans la première direction et dans la deuxième direction, une variation dans trois directions spatiales.

5. Réseau (20) selon l'une des revendications 2 à 4, avec une pluralité de lignes courbes (34) le long desquelles les dispositifs de réception de sons sous-marins (22) sont alignés.

6. Réseau (20) selon la revendication 5, dans lequel les lignes courbes adjacentes (34) de la pluralité de lignes courbes (34) présentent l'absence d'un espacement équidistant.

7. Réseau (20) selon l'une des revendications précédentes,
dans lequel une taille des récepteurs acoustiques sous-marins (26) de la pluralité de dispositifs de réception acoustique sous-marins (22) diffère les uns des autres.

8. Réseau (20) selon l'une des revendications précédentes,
dans lequel la distance entre le récepteur acoustique sous-marin (26) et le réflecteur acoustique (28) de la pluralité de dispositifs de réception acoustique sous-marins (22) diffère d'un dispositif à l'autre.

9. Embarcation (30) présentant les caractéristiques suivantes :
un corps délimité par une coque extérieure (32), la coque extérieure (32) étant conçue pour être en contact avec l'eau ;
le réseau (20) selon l'une des revendications 1 à 8, la pluralité de dispositifs de réception de sons sous-marins (22) étant installés dans le bateau (30) de telle sorte que les fenêtres acoustiques (24) permettent l'incidence d'une onde sonore dans le corps, les récepteurs de sons sous-marins associés (26) associés étant disposés dans le corps entre les fenêtres acoustiques (24) et les réflecteurs acoustiques associés.

10. Embarcation (30) selon la revendication 9,
dans lequel les fenêtres acoustiques (24) ferment une ouverture de la coque extérieure (32).

11. Embarcation (30) selon l'une des revendications 9 ou 10,
les fenêtres acoustiques (24) se terminant au niveau de la coque extérieure (32).

12. Embarcation (30) selon l'une des revendications 9 à 11,
dans lequel le dispositif de réception de sons sous-marins (22) s'étend autour d'une proue du bateau.

13. Procédé d'adaptation d'un réseau de dispositifs de réception de sons sous-marins (20) selon l'une des revendications 1 à 8 pour la réception de sons sous-marins à un bateau (30), comprenant les étapes suivantes:
détermination d'une impédance acoustique du véhicule nautique;
optimiser une disposition des dispositifs de réception de sons sous-marins (22) du réseau (20) pour la réception de sons sous-marins dans un espace disponible dans le bateau.

14. Procédé selon la revendication 13, dans lequel l'optimisation comprend une analyse de la réponse en fréquence du réseau (20) pour la réception de sons sous-marins, la réponse en fréquence étant linéarisée par l'optimisation.

15. Procédé selon l'une des revendications 13 ou 14, dans lequel l'agencement des dispositifs de réception de sons sous-marins (22) comprend une distance entre les dispositifs de réception de sons sous-marins (22) et/ou une distance entre les réflecteurs acoustiques et les récepteurs de sons sous-marins (26) des dispositifs de sons sous-marins ( ) et/ou une taille des récepteurs de sons sous-marins (26).
